# EUROPEAN PATENT APPLICATION

(11) **EP 1 376 411 A2**
(43) Date of publication of application: **02.01.2004**
(21) Application number: 03445062.7
(22) Date of filing: 22.05.2003
(51) Int. Cl.: G06F 17/30

(54) **Stylesheet proxy**

(30) Priority: 20.06.2002 SE 0201898
(71) Applicant: AB Mobile Media Group Stockholm, 100 64 Stockholm (SE)
(72) Inventor: Danielsson, Magnus, 112 29 Stockholm (SE); Ljungquist, Anders, 165 71 Hässelby (SE); Hall, Hans, 169 51 Solna (SE); Akerberg, Stefan, 162 64 Vällingby (SE)
(74) Representative: Sundström, Per Olof

(57) **Abstract**

1. A method of enabling non-style sheet enabled browsers to style a web service, such as a web page, which constitutes an input markup language,
   comprising
   providing a middleware server in a communication path between a web server, which provides service and the browsers, the middleware server comprising renderers which are specific for the client browsers,
   bringing the web server to add a style sheet enabled service to a data structure in the middleware server in response to a request for the service from a specific browser,
   bringing a renderer, which is specific for the requesting browser, to fetch styling information from the web service, and to include fetched styling information as markup language elements in the web page, to form an output markup language page and
   sending the output markup language page from the data structure to the browser, as well as an apparatus for performing the method.

## Description

The present invention refers to a method of the kind defined in the preamble of the broad method claim.

The invention also refers to an apparatus for performing the method.

Thus, the invention refers to a method and apparatus for enabling non-style sheet enabled browsers/devices to style a web service, such as a web page, which constitutes an input markup language.

With the entrance of style sheets on the market, web developers were able to add styling to their web applications without sacrificing to make the HTML code unreadable. Before the style sheet era, the developers had to add somewhat browser specific HTML elements to the code to make it look good.

Most new desktop browsers now support style sheets. The web developer adds a hyperlink reference to the style sheet file in the web page code, and the browser will fetch the style sheet when the web page is loaded. The browser has the ability to parse the style sheet, and style the web page accordingly.

On the other hand, older browsers that don't support style sheets will not be able to take advantage of the styling rules that is defined in the style sheet. This will force the developer to write code with the styling included into the HTML code, which makes the code quite unreadable, and it will not by any means be compatible with all browsers.

To make the web page look good on all browsers, the developers are eventually ending up creating the web page for both browsers that are style sheet enabled, and for non-style sheet enabled browsers. This means that they will double the work when developing the same web page twice. Additionally, if the web page should be rendered on a mobile phone, the developer will have to create a specific page in WML for that as well. Even if there are some intelligent methods to create a WML page from the web page, the styling defined in the style sheet won't be included.

Web developers want to write one single instance of the web application, and make it look good on all browsers. Additionally, they want to use style sheets, since they are standardized and don't make the code unreadable and hard to support.

One part of the problem is that it is not only old browsers that don't support style sheets. When the devices that carry a web browser is getting smaller and smaller, it is hard for the manufacturers to be able to fit a high-end style sheet enabled browser into these kinds of devices. Therefore, many of the PDA browsers available today don't support style sheets, which make it hard for developers that want their code to look good on all kinds of devices.

An object of the invention is therefore to provide a full or partial solution to one or more of the above problems.

This object is attained by the invention.

The inventions is defined in the appended broad claims to the method and to the apparatus.

Embodiments of the invention are defined in the appended sub-claims.

To be able to use styling on a non-style sheet enabled browser, the inventive solution uses a middleware server. Such a middleware server is revealed in the Swedish patent application, with the title "A method and an apparatus for rendering a web service for different browsers", filed on the same day as the present application.

The inventive solution uses a middleware application that takes care of the rendering of the web service for all different types of devices. This application will take a standardized markup language as input from the underlying web service, and render it to a markup language supported and usable for the device connecting to the service. The method to do this is described below.

The middleware server will act as a web server for the underlying web service. All connections to the web service will go through the middleware server. When, for example, a user with a mobile phone wants to connect to the web service, he connects to the middleware server (below called server). The server will check the user's request and from that determine the type of device and browser. In some cases it might be necessary to strip some information out of the web service if the device are of such a type that it is useless to display it. By attaching the device display size to the request we let the owners of the web application have full flow control of the session (see Example 1 below). The server will make a further request of the initially requested web page, with said device display size attachment, of the web service from a web server hosting the web service. This web server can be either on the same machine or on some other machine that the server can connect to. For scalability reasons, there can be more than one web server hosting the web application as well.

When the middleware server receives the requested web page from the web server, it will be in such a format (markup language) so that the server knows exactly what to do with it for the current device type. It will parse the web page and put it in a tree data structure (or any other suitable data structure). Then a "renderer" matching the current connecting device is initialized. The tree data structure will be traversed, and a new web page will be built from the original web page. The renderer contains all the specifics of the device and browser type. For example, if the middleware server takes XHTML or a similar markup language as input from the web service, it might be difficult to map nested tables into the Wireless Markup Language (WML). WML doesn't support any nested tables, so that has to be solved in another way. Additionally, it might take some information (hints) into account that the web service developer has included in the original web page. These hints are a way for the middleware server to make the web page look even better than it would be if no hints were provided. Imagine that a web page contains a menu with links. One of the links might be "Print this page", which would mean that the user could print the web page on paper. This is quite unnecessary when the page is shown in a mobile phone, since there seldom are printers attached to mobile phones. To save space, the developer of the web service could add a hint on that link to tell the middleware server to remove that menu item if the web page is shown on a mobile phone. One other hint would be a way for the developer of the web service to tell the middleware server how to deal with tables. Tables are typically difficult to make look good on a mobile phone. One way could be to tell the middleware server that it should remove the table and only show the content of it, if the web page should be shown on a mobile phone.

When the renderer has built a new tree that contains the target markup language, the fragmentation engine will take over (for some devices, the fragmentation part could be skipped). Small devices, such as mobile phones, have limited memory and it is often necessary to fragment the web page into small fragments that fit in the target phone's memory. The fragmentation engine will traverse the tree, and count the size of each step. Since the middleware server has information about all devices, it is well known how large the fragments should be for each phone. So the fragmentation engine will walk through a part of the tree that fits into the phone's memory, attach a link to the next fragment on it, save it, and then continue with the next fragment at the place were it stopped filling the first fragment. All fragments are stored at the middleware server during the current user's session, so that the user can click through all the fragments. When the fragmentation engine has saved all fragments, it will send the first fragment of the web page back to the requesting device.

Moreover, it is possible to fragment, i.e. to bring a fragmentation engine to split, the pages when it is decided to split the web page as to layout, when hints are used. This has nothing to do with the memory capacity of the terminal to which the web page is sent, but rather concerns how the page is shown on the terminal. Of course the memory capacity will also be a factor, because, if we make a fragment for layout only, we must in turn fragment it, in order to have it shown on the terminal.

Thus, a corresponding method step would comprise having said fragmentation engine to split the web page into fragments with respect to layout, linking from one fragment to the other, not necessarily when one fragment has filled the device memory.

The middleware server can be considered as a generic browser/device recognition and adaptation middleware server.

Recall that the client browser will make all requests to the middleware server, which in turn will fetch the requested web page at a web server behind the middleware server. When the middleware server receives the requested web page, it will be processed for perfection according to the client browser. The processing unit inside the middleware server is the module called renderer, that is specific for the client browser.

If the requested web page includes a reference to a style sheet, the renderer can take advantage of that by using a style sheet parser that will read all styling rules available for the web page. Recall that the renderer will walk through a data structure holding the web page. Think of each step as increasing the program counter one step, which means that the web page is parsed element by element. For each element in the web page, styling information can be fetched from the style sheet parser. This styling information can be included as markup language elements in the resulting web page. This results in a web page that is less unreadable and specific for the requesting device, but that doesn't matter since the page is dynamically rendered.

### Examples:

If the requesting browser is a WAP browser, i.e. most likely a mobile phone, and there is a styling rule (according to the CSS2 standard)
.mystyle { font-weight: bold; font-style: italic }
in the style sheet, and a piece of the web page looks like
<p class="mystyle"> I want this text to be bold and italic </p>
the piece of code in the rendered page on the client browser will look like:
***I want this text* to be *bold and italic***

The WML code of the resulting page would look something like:
<b><i> I want this text to be bold and italic </i></b>

The renderer in the middleware server will add the elements b and i to the page as a result of the style sheet rules.

If the requesting device is an HTML browser not supporting style sheets, and there is a styling rule defined as follows in the style sheet
.mystyle {font-weight: bold; color: #0000FF}
and a piece of the web page looks like
<p class="mystyle"> I want this text to be blue and bold </p>
the result on the client browser would be
**I want this text to be blue and bold**

The HTML code of the resulting page will look like
<b><font color="#0000FF"> I want this text to be blue and bold </font></b>

The renderer in the middleware server adds the elements b and font as a result of the style sheet rules.

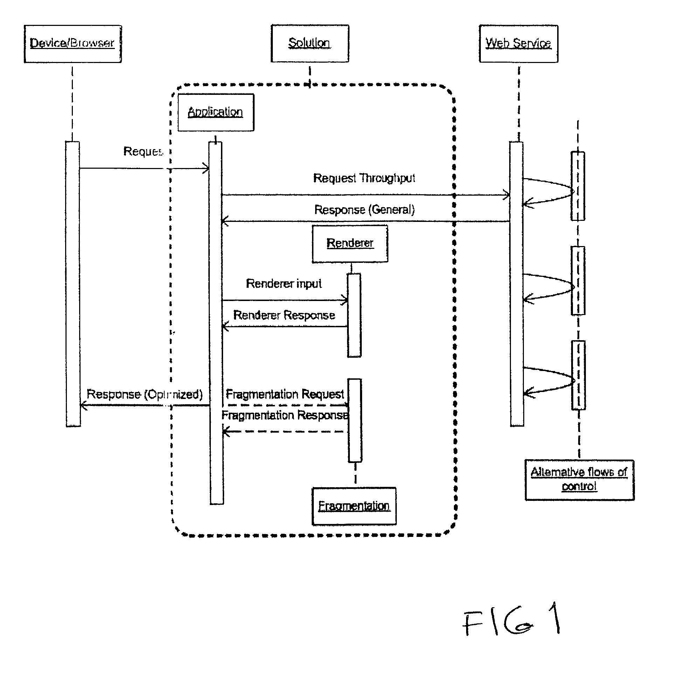

An overview of a middleware server in the communication path between web service and the browsers/devices, is shown in the appended Fig. 1.

This invention gives the web developer the ability to write all their styling in style sheets, without having to add any styling in the markup language. Also, they don't need to worry about the ability for different devices to parse style sheets, since the middleware server takes care of that. Also, when the need for styling in the markup language is gone, the web developer can use, for example, XHTML or even XHTML basic as a markup language, which makes it much easier for the middleware server to parse the input markup language.

An apparatus for performing the method is a technical equivalent of the inventive method.

## Claims

1. A method of enabling non-style sheet enabled browsers to style a web service, such as a web page, which constitutes an input markup language,
comprising
providing a middleware server in a communication path between a web server, which provides service and the browsers, the middleware server comprising renderers which are specific for the client browsers,
bringing the web server to add a style sheet enabled service to a data structure in the middleware server in response to a request for the service from a specific browser,
bringing a renderer, which is specific for the requesting browser, to fetch styling information from the web service, and to include fetched styling information as markup language elements in the web page, to form an output markup language page and
sending the output markup language page from the data structure to the browser.

2. A method according to claim 1, wherein the renderers use a style sheet parser, which reads all styling rules that are available,
bringing the renderer to traverse the data structure holding the service,
whereby the service is parsed, element by element.

3. A method according to claim 1 or 2, wherein the input markup language is XHTML Basic.

4. An apparatus for performing the method according to any of claims 1-3.
